# EUROPÄISCHE PATENTANMELDUNG

(11) **EP 4 336 002 A1**
(43) Veröffentlichungstag der Anmeldung: **13.03.2024**
(21) Anmeldenummer: 22194416.8
(22) Anmeldetag: 07.09.2022
(51) Int. Cl.: E05B 51/02, F16B 47/00

(54) **MOBILE SICHERHEITSVORRICHTUNG**

(71) Anmelder: Thorsten, Roth, 44149 Dortmund (DE)
(72) Erfinder: Thorsten, Roth, 44149 Dortmund (DE)
(74) Vertreter: Von Rohr Patentanwälte Partnerschaft mbB

(57) **Zusammenfassung**

Beschrieben ist eine mobile Sicherheitsvorrichtung für bewegliche Gegenstände, insbesondere einen Diebstahlschutz für bewegliche Gegenstände.

## Beschreibung

Die Erfindung betrifft eine mobile Sicherheitsvorrichtung für bewegliche Gegenstände, insbesondere einen Diebstahlschutz für bewegliche Gegenstände.

### Einleitung und Stand der Technik

Die vorliegende Erfindung betrifft eine mobile Sicherheitsvorrichtung für bewegliche Gegenstände. Bei den beweglichen Gegenständen kann es sich beispielswiese um Zweiräder, Schilder, Ampelanlagen, Werkzeuge oder ähnliches handeln.

Der Stand der Technik wird nun bezugnehmend auf Sicherheitsvorrichtungen für Zweiräder näher beschrieben; die Ausführungen gelten dabei analog für alle anderen beweglichen Gegenstände.

Ein Zweiradschloss ist ein spezielles Schloss zum Schutz vor beispielsweise Fahrraddiebstahl. Verschiedene Bauarten und deren Ausführungen bieten unterschiedlich guten Schutz gegen verschiedene Werkzeuge. Bei der Auswahl muss ein Kompromiss zwischen Gewicht, Handhabung, Preis - auch in Relation zum Zweirad - sowie dem gewünschten Schutz getroffen werden.

So besteht zum Beispiel ein Bügelschloss, ähnlich einem Vorhängeschloss, aus einem großen mit Kunststoff ummantelten Metallbügel und dem eigentlichen Schloss, einem Metallkörper mit zwei Öffnungen. Bügelschlösser bieten den vergleichsweisen besten Schutz vor Diebstählen und wiegen beispielsweise bei einer Bügeldicke größer 14 mm ca. 1,7 bis 2,8 kg je nach Bügelabmessungen. Die Bügel sind bis zu 18 mm dick. Die Bügel von hochwertigen Bügelschlössern sind außen gehärtet, um gegen Durchtrennen gesichert zu sein, in der Mitte jedoch etwas weicher, um auch Kältesprayattacken standhalten zu können. Bügelschlösser ähneln in ihrer Verwendung den Kabel- und Kettenschlössern. Das Schloss kann durch die Speichen oder den Radrahmen geführt werden, aber auch um feste Objekte (Laternen, Radständer, Zaunlatten etc.) gelegt werden, wodurch im Gegensatz zum Speichenschloss das Rad gegen Davontragen gesichert ist.

Falt- oder Gelenkschlösser sind seit 2005 im Handel. Diese Schlossart besteht aus starren Gliedern, die wie beim Gliedermaßstab mittels Gelenken zusammengefaltet werden können. Durch diese Gelenkkonstruktion ist es sehr viel flexibler als ein Bügelschloss, soll aber laut Herstellerangaben ähnliche Festigkeitswerte erreichen. Dies liegt mit daran, dass die beweglichen Glieder das Ansetzen von Sägen erschweren, das flache Profil außerdem das Ansetzen von Bolzenschneidern. Je nach Ausführung sind verschiedene Längen- und Sicherheitsklassen erhältlich, auch werden sowohl Zahlen- als auch Zylinderschlösser angeboten. Die verfügbaren Längen reichen von 70 cm bis 120 cm und die Gewichte reichen von 590 g bis 1625 g.

Eine schwere Metallkette dient analog dem Kabel- und Bügelschloss der Diebstahlsicherung. Als Schloss kann ein Vorhängeschloss verwendet werden. Kettenglieder sind oft nur bis zu zehn Millimeter dick, mit entsprechend großen Bolzenschneidern sind sie so zu durchtrennen. Die Kettenglieder von hochwertigen Kettenschlössern sind außen gehärtet und in der Mitte des Materials etwas weicher, wie bei hochwertigen Bügelschlössern. Der Begriff Kettenschloss bezeichnet auch das Verbindungsglied der Fahrradkette, das anstatt vernietet zu sein auf einer Seite mit einem Sprengring verschlossen ist, sodass man damit die beiden Enden der Kette zusammenschließen kann.

Alle diese Schlossarten sind entweder vom Sicherheitsaspekt, vom Gewicht oder der Handhabung nicht zufriedenstellend. Insbesondere sind diese Fahrradschlösser dahingehend nachteilig, dass sie ein Wegtragen des gesicherten Zweirads nur dann wirkungsvoll verhindern, wenn das Schloss nicht nur durch den Radrahmen geführt wird, sondern gleichzeitig um feste Objekte (Laternen, Radständer, Zaunlatten etc.) gelegt wird. Hinzukommend eignen sich die bekannten Zweiradschlösser nicht dazu, gleichzeitig die Standeigenschaften des Fahrrads zu verbessern.

Alternativ ist ein Zweiradständer bekannt, der ebenfalls zum Absichern eines Zweirads dienen kann. Der in EP 3 456 613 A beschrieben Zweiradständer umfasst einen mindestens eine Aushöhlung aufweisenden Fuß, wobei durch Kontaktierung dieses Fußes mit einer Fläche diese mindestens eine Aushöhlung mit der Fläche mindestens einen Hohlraum bildet, wobei in mindestens einem dieser Hohlräume ein Unterdruck aufgebaut und abgebaut werden kann. Dieser aus dem Stand der Technik bekannte Zweiradständer weist den Nachteil auf, dass er dauerhaft mit dem Zweirad verbunden ist und bei Nichtbenutzung nicht vom Zweirad entfernt werden kann.

Die vorgenannten Schlösser dienen nicht nur zur Absicherung von Zweirädern, sondern können auch beliebig zur Absicherung von anderen beweglichen Gegenständen verwenden werden. Es ist offensichtlich, dass sich die vorbezeichneten Schlösser auch zur Fixierung von anderen beweglichen Gegenständen eignen.

Im Hinblick auf diesen Stand der Technik stellt sich die vorliegende Erfindung die Aufgabe, eine neue effiziente mobile Sicherheitsvorrichtung, insbesondere ein Schlosssystem, beispielsweise ein Zweiradschloss, zur Verfügung zu stellen.

Aufgabe der Erfindung ist es ferner, eine neue effiziente mobile Sicherheitsvorrichtung, insbesondere ein Schlosssystem, beispielsweise ein Zweiradschloss, bereitzustellen, das gleichzeitig dem zu sichernden Gegenstand, also beispielsweise dem Zweirad, Standeigenschaften vermittelt und das zusätzlich zur Diebstahlsicherung beiträgt.

Die erfindungsgemäße effiziente mobile Sicherheitsvorrichtung, insbesondere das Schlosssystem, beispielsweise das Zweiradschloss, soll möglichst effektiv und einfach im Alltag anwendbar sowie kostengünstig herstellbar sein.

Außerdem sollte eine Verwendung für bereits existierende zu sichernde Gegenstände, beispielsweise Zweiräder, einfach zu bewerkstelligen sein.

Dabei soll die neue effiziente mobile Sicherheitsvorrichtung, insbesondere das Schlosssystem, beispielsweise das Zweiradschloss, ein Wegtragen des an sich beweglichen Gegenstands, beispielsweise des abgeschlossenen Zweirads, verhindern, ohne dass es erforderlich ist, das Schlosssystem gleichzeitig durch fest lokalisierte Objekte (Laternen, Radständer, Zaunlatten etc.) zu führen.

Darüber hinaus soll die neue effiziente mobile Sicherheitsvorrichtung, insbesondere das Schlosssystem, beispielsweise das Zweiradschloss, möglichst nicht mit dem beweglichen Gegenstand, beispielsweise dem Zweirad, dauerhaft verbunden sein, so dass es bei Nichtverwendung vom dem zu sichernden Gegenstand, beispielsweise dem Zweirad, entfernt werden kann.

Diese Aufgaben werden durch die neue effiziente mobile Sicherheitsvorrichtung, insbesondere das Schlosssystem, beispielsweise das Zweiradschloss, der vorliegenden Erfindung gelöst.

Die mobile Sicherheitsvorrichtung ist durch eine Kette oder ein Seil gekennzeichnet, das geöffnet und geschlossen werden kann und welches mit einem Gehäuse lösbar verbunden ist, welches an einer Seite eine Einrichtung aufweist, die in der Lage ist, mit einer im Wesentlichen glatten Oberfläche ein Vakuum aufzubauen.

Erfindungsgemäß ist somit vorgesehen, eine mobile Sicherheitsvorrichtung aus zwei wesentlichen Bauelementen auszubilden.

Das erste Element ist eine Kette oder ein Seil, welches durch einen zu sichernden Gegenstand, beispielsweise einem Radrahmen oder einen Reifen des Zweirads, geführt werden kann und somit den per se beweglichen Gegenstand, beispielsweise das Zweirad, abschließt. Die Kette oder das Seil ist mit einem Verschluss versehen, mit welchem die Kette oder das Seil geöffnet und verschlossen werden kann. Durch ein Öffnen des Verschlusses kann die Kette oder das Seil durch eine Öffnung des per se beweglichen Gegenstands, beispielsweise dem Zweiradrahmen oder den Reifen des Zweirads, geführt werden und danach kann die Kette oder das Seil wieder am Verschluss geschlossen werden.

Da es häufig nicht möglich ist, das entsprechende Seil oder Kette zusätzlich durch feste Objekte, insbesondere Laternen, Radständer, Zaunlatten usw., zu führen, ist das Seil oder die Kette mit einem zweiten Element verbunden. Hierbei handelt es sich um ein Gehäuse, welches an einer Seite derart ausgebildet ist, dass es mit einer im Wesentlichen geraden Fläche ein Vakuum ausbilden kann. Damit kann die erfindungsgemäße mobile Sicherheitsvorrichtung beispielsweise unter Ausbildung eines Vakuums mit dem Boden, aber auch mit anderen gerade Flächen, die beliebig angeordnet sein können (horizontal oder vertikal) fest verbunden werden. Das Vakuum ist dabei vorzugsweise so stak ausgebildet, dass das Gehäuse nicht durch eine von außen aufzubringende Kraft, insbesondere Muskelkraft, von der Fläche, mit welchem das Gehäuse ein Vakuum aufbaut, gelöst werden kann.

Die erfindungsgemäße mobile Sicherheitsvorrichtung, beispielsweise das Zweiradschloss der vorliegenden Erfindung, weist somit in dem Gehäuse mindestens eine gegebenenfalls zu erzeugende Aushöhlung auf, wobei durch Kontaktierung des Gehäuses mit einer Fläche diese mindestens eine Aushöhlung zusammen mit der Fläche mindestens einen Hohlraum bildet. Die erfindungsgemäße mobile Sicherheitsvorrichtung, beispielsweise das Zweiradschloss, ist dann dadurch gekennzeichnet, dass in mindestens einem dieser Hohlräume ein Unterdruck aufgebaut und abgebaut werden kann.

Das Gehäuse der mobilen Sicherheitsvorrichtung der vorliegenden Erfindung beispielsweise das Zweiradschloss ist dabei vorzugsweise aus einem flexiblen Material, wie Gummi und / oder flexiblem Silikon, welches sich bei Unterdruck an der Fläche "festsaugt", gefertigt. Entsprechende Materialien sind dem Fachmann bekannt. Alternativ kann das Gehäuse aber auch aus metallischen Materialien, beispielsweise Aluminium, oder Carbon gefertigt werden.

Da die erfindungsgemäße mobile Sicherheitsvorrichtung, also beispielsweise das erfindungsgemäße Zweiradschloss, unabhängig von dem zu sichernden beweglichen Gegenstand, beispielsweise Zweirad, ausgebildet ist, wird eine sichere Fixierung des beweglichen Gegenstands, beispielsweise des Zweirads, auf unebenen und/oder geneigten Flächen ermöglicht, ohne dass es vorzugsweise einer weiteren Fixierung bedarf.

Bei der erfindungsgemäß zu verwendenden Fläche, mit welcher das Gehäuse über den Aufbau eiunes Vakuums verbunden wird, handelt es sich im Normalfall um den Boden, auf welchem die erfindungsgemäße mobile Sicherheitsvorrichtung angeordnet wird. Es kann sich aber auch um andere Flächen, wie beispielsweise um eine Wand, handeln.

Im Rahmen der vorliegenden Erfindung wird unter einer mobilen Sicherheitsvorrichtung die erfindungsgemäß vorstehend und in besonderen Ausgestaltungen weiter unten beschriebe Vorrichtung verstanden, die dazu dient, bewegliche Gegenstände, wie beispielsweise Zweiräder, Schilder, Ampelanlagen, Werkzeuge oder ähnliches, im Wesentlichen zu sichern, so dass ihre Beweglichkeit stark eingeschränkt oder sogar verhindert wird.

Falls es sich im Rahmen der vorliegenden Erfindung um Zweiräder handelt, so umfassen Zweiräder im Sinne der vorliegenden Erfindung unmotorisierte Zweiräder, beispielsweise Fahrräder, und motorisierte Zweiräder, beispielsweise Motorräder, Mopeds, Motorroller, aber auch motorisierte Fahrräder.

Fahrräder im Sinne der Erfindung umfassen unmotorisierte Fahrräder und motorisierte Fahrräder. Motorisierte Fahrräder meint dabei solche mit einem (zusätzlichem) Elektroantrieb. Beispiele hierfür sind E-Bikes und Pedelecs bzw. S-Pedelecs.

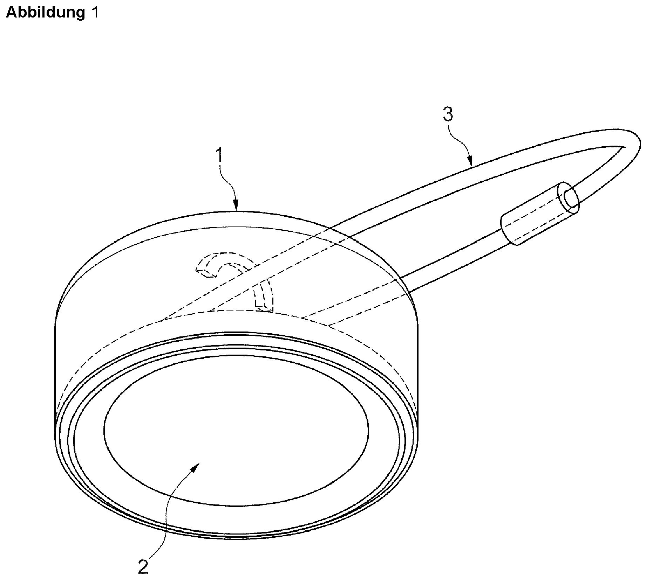

Die erfindungsgemäße mobile Sicherheitsvorrichtung, beispielsweise das erfindungsgemäße Zweiradschloss, ist in einer möglichen Ausführungsform wie folgt ausgebildet, wobei diese Ausführungsform in den Abbildungen 1 bis 3 gezeigt werden:

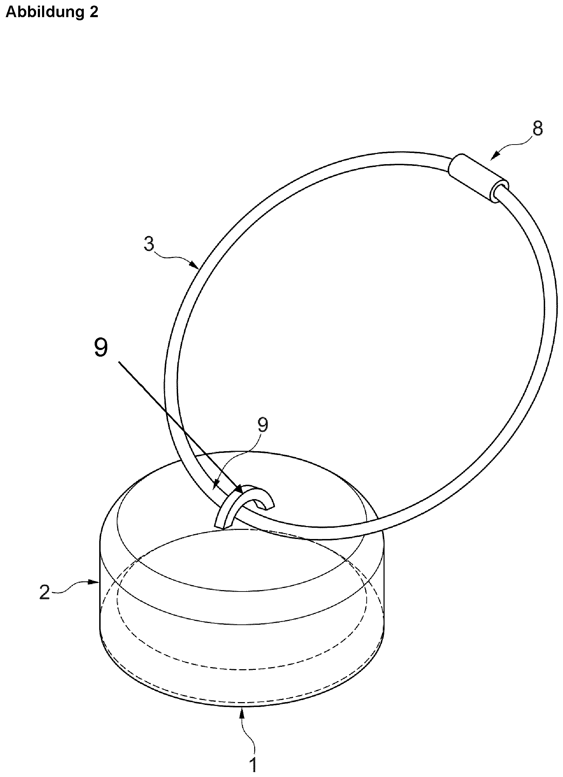

Die Abbildungen 1 und 2 zeigen eine erfindungsgemäße mobile Sicherheitsvorrichtung, beispielsweise ein erfindungsgemäßes Zweiradschloss, welches ein Gehäuse 1 aufweist. Die genaue Form des Gehäuses kann beliebig gewählt werden; in der vorliegenden Ausführungsform ist das Gehäuse rund ausgebildet. Es weist an einer Seite eine zurückgesetzte Fläche mit einem Vakuumsauger 2 auf, mit welchem mit einer (nicht dargestellten) Fläche ein Vakuum erzeugt werden kann. Damit kann das Gehäuse 2 auf einer Fläche fixiert werden. An dem Gehäuse 1 ist eine Kette oder ein Seil 3 vorgesehen, mit welchem das Gehäuse 1 mit einem (nicht dargestellten) beweglichen Gegenstand, beispielsweise einem Zweirad, verbunden werden kann.

Die Kette oder das Seil 3 weist einen Verschluss 9 auf und ist über eine Öse 8 mit dem Gehäuse 1 verbunden.

Sofern ein Unterdruck durch den Vakuumsauger 2 der erfindungsgemäßen mobilen Sicherheitsvorrichtung mit einer Fläche vorliegt, weist der bewegliche Gegenstand, beispielsweise das Zweirad, in fixierter Position, beispielsweise in Parkposition, neben einem Diebstahlschutz auch eine erhöhte Standfestigkeit auf, da der Unterdruck das Gehäuse 1 und damit auch den beweglichen Gegenstand, beispielsweise das Zweirad, über die Kette oder das Seil an die Fläche "festsaugt".

Erfindungsgemäß bedeutet "Parkposition" bzw. "parken" bzw. "Parkmodus", dass der bewegliche Gegenstand, beispielsweise das Zweirad, an einem Ort steht, wobei das Gehäuse 1 unter Einsatz von Vakuum eine Fläche kontaktiert.

Wenn beispielsweise ein Zweirad, dass mit einer erfindungsgemäßen mobilen Sicherheitsvorrichtung versehen ist, geparkt wird, kann der mindestens einen Hohlraum des Saugfußes evakuiert werden, sodass ein Unterdruck in diesem mindestens einem Hohlraum besteht. Eine entsprechende Stärke des Unterdrucks (bzw. die Höhe der Druckdifferenz) verhindert dabei sowohl das unrechtmäßige (Diebstahl), als auch das ungewollte ("Umkippen") Bewegen des zu sichernden beweglichen Gegenstands, beispielsweise des Zweirads, insbesondere, wenn die Kette oder das Seil 3 entsprechend eng durch den beweglichen Gegenstand, beispielsweise das Zweirad, geführt wird.

Erfindungsgemäß bedeutet Evakuieren die Erzeugung eines Unterdrucks, also eines Drucks, der geringer als der Umgebungsdruck ist.

Die erfindungsgemäße mobile Sicherheitsvorrichtung, beispielsweise das erfindungsgemäße Zweiradschloss, kann eine Druckanzeige aufweisen, welche die Stärke des Unterdrucks im Bereich des Vakuumsaugers 2 anzeigt. Eine solche Druckanzeige kann sich auch bzw. stattdessen an dem zu sichernden Gegenstand, beispielsweise dem Zweirad, befinden.

Auch ist es möglich, dass der Unterdruck in der erfindungsgemäßen mobilen Sicherheitsvorrichtung über eine auf einem Smartphone installierten App-Anwendung gesteuert, zumindest aber abgelesen, werden kann.

In einer Ausführungsform der erfindungsgemäßen mobilen Sicherheitsvorrichtung erfordert der Abbau des Unterdrucks in dem Gehäuse eine Verifizierung.

Durch eine Verifizierung soll verhindert werden, dass der Unterdruck auf unbefugte Weise abgebaut werden kann, da ein solcher unbefugter Druckausgleich die erhöhte Standfestigkeit und die Diebstahlsicherung der erfindungsgemäßen mobilen Sicherheitsvorrichtung, beispielsweise des Zweiradschlosses, bzw. des verbundenen Zweirads, ungewollt aufheben würde.

Insbesondere bei Verwendung einer analogen Verifizierung wird vorzugsweise ein Stellmotor mit Empfangsvorrichtung - beispielsweise einer Antenne - an den Vakuumsauger 2 der erfindungsgemäßen mobilen Sicherheitsvorrichtung angeschlossen. Insbesondere bei Verwendung von Zweirädern mit elektrischen Komponenten bzw. einem Verbrennungsmotor kann die hierzu benötigte Energie von diesen Komponenten bezogen werden. Alternativ und/oder Additiv und/oder zur Absicherung kann beispielsweise eine Batterie und / oder Akkumulator dienen, die beispielsweise bei Verwendung eines Fahrrads als Zweirad durch das Treten der Pedale während der normalen Fortbewegung aufgeladen werden kann.

Vorzugsweise erfolgt die analoge Verifizierung dabei durch ein codiertes (Funk)Signal.

In einer bevorzugten Ausführungsform erfolgt die Verifizierung per Signal eines mobilen Geräts, wie einem Smartphone, über eine "App".

Diese Verifizierung soll sicherstellen, dass lediglich die berechtigte Person(en) den Druckausgleich initiieren und somit den beweglichen Gegenstand aus der Parkposition lösen kann. Eine solche Verifizierung kann beispielsweise analog oder digital erfolgen. Bei erfolgreicher Verifizierung kann beispielsweise anschließend ein Ventil geöffnet werden bzw. öffnet sich ein Ventil, wodurch Umgebungsatmosphäre in den mindestens einen Hohlraum des Fußes fließt, und ein Druckausgleich stattfindet.

Beispiele der analogen Verifizierung umfassen die Verwendung eines Schlüssels oder eines Zahlencodes. Beispiele einer digitalen Verifizierung umfassen die Verwendung einer "App" oder einer Funkfernbedienung.

Die Verwendung einer "App" meint dabei die digitale Verifizierung mittels eines Programms auf einem tragbaren Computer, wie einem Smartphone, welches ein entsprechendes Verifizierungssignal sendet.

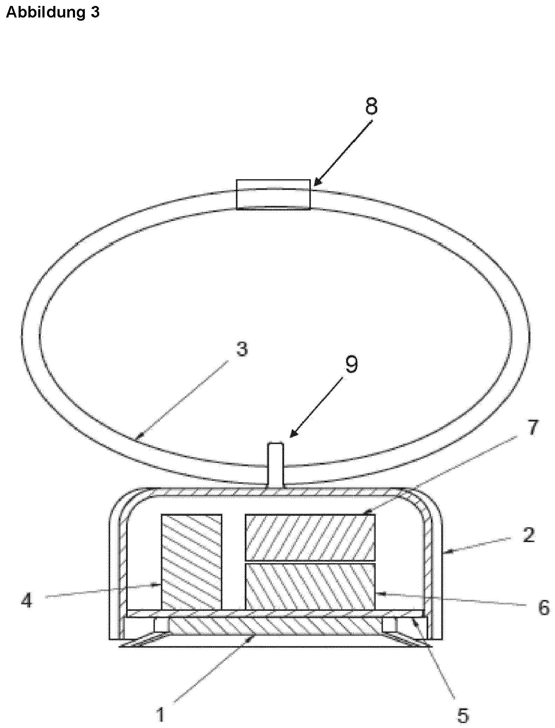

In der Abbildung 3 ist eine Ausgestaltung der vorliegenden Erfindung dargestellt, wie die Funktionsweise des erfindungsgemäßen Zweiradschlosses erreicht werden kann. Demnach weist das Gehäuse 1 ein elektrische Vakuumpumpe 4 auf, mit welchem ein Vakuum zwischen der (nicht dargestellten Fläche) und dem Vakuumsauger 2 des Gehäuses 1 erzeugt werden kann.

Ein Komponententräger 5 trennt dabei den Vakuumsauger 2 räumlich von der elektrischen Vakuumpumpe 4 sowie einer Akku-Einheit 6, mit welchem der Vakuumsauger 2 betrieben werden kann. Mit Hilfe der Steuerungseinheit 7 wird ein Signal zum Aufbau oder Abbau des Vakuums an den Vakuumsauger 2 gesendet, welcher dann entsprechend die mobile Sicherheitsvorrichtung verschließt oder öffnet. Mit Hilfe des Verschlusses 8 kann die Kette oder das Seil 3 geöffnet und geschlossen werden, so dass die Kette oder das Seil 3 durch eine Öffnung an dem beweglichen Gegenstand (beispielsweise dem Rahmen oder Felge eines Fahrrads) geführt und dann verschlossen werden kann. Analog kann die Kette oder das Seil 3 wieder von dem beweglichen Gegenstand, dem Zweirad, entfernt werden.

Die Kette oder das Seil 3 ist beispielsweise durch Führen von Kette und Seil 3 durch eine Öse mit dem Gehäuse 1 verbunden.

In einer alternativen Ausführungsform weist das erfindungsgemäße Zweiradschloss eine Vorrichtung zum manuellen Erzeugen des Unterdrucks auf.

Die manuelle Erzeugung des Unterdrucks kann beispielsweise mittels einer Drucktritt-Fläche erfolgen. Im Parkmodus bewirkt eine Kraftauswirkung auf diese Drucktritt-Fläche in Richtung der Fläche eine Kontraktion des mindestens einen Hohlraums im mindestens einen Gehäuse 1 der mobilen Sicherheitsvorrichtung. Bei Entfernung dieser Kraftauswirkung erfolgt die Ausdehnung dieses mindestens einen Hohlraums. Wenn nun beispielsweise ein entsprechend konfiguriertes Ventil mit dem Fuß verbunden ist, kann bei Kontraktion des Hohlraums Luft entweichen, bei der anschließenden Ausdehnung des Hohlraums jedoch keine Luft zurückströmen, wodurch ein Unterdruck im Fuß entsteht.

Auch eine integrierte manuelle Pumpe zur Erzeugung eines Unterdrucks ist denkbar.

In einer Ausführungsform wird der Unterdruck automatisiert erzeugt.

Additiv bzw. Alternativ zu der beschriebenen manuellen Unterdruckerzeugung können auch weitere Methoden zur Evakuierung verwendet werden, beispielsweise mit einer automatisiert betriebenen Pumpe. Insbesondere bei Verwendung von Zweirädern mit elektrischen Komponenten bzw. einem Verbrennungsmotor kann die automatisiert betriebene Pumpe ihre Energie von diesen Komponenten beziehen. Alternativ und/oder additiv und/oder zur Absicherung einer solchen Pumpe kann beispielsweise eine Batterie dienen. Eine solche Batterie kann, beispielsweise bei Verwendung eines Fahrrads als Zweirad, durch das Treten der Pedale während der normalen Fortbewegung aufgeladen werden.

In einer Ausführungsform erfordert das Aufbauen des Unterdrucks eine Verifizierung.

Die Verifizierung zum Aufbau des Unterdrucks kann analog zur bereits beschriebenen Verifizierung zum Abbau des Unterdrucks erfolgen. Eine erfolgreiche Verifizierung kann dabei beispielsweise ein Ventil schließen, wodurch ein Druckausgleich eines eventuell entstehenden bzw. vorhandenen Unterdrucks in den mindestens einen Hohlraum des Fußes 6 mit der Umgebung verhindert wird.

Auch diese Verifizierung zum Aufbau des Unterdruckes erfolgt bevorzugt über eine "App", welche beispielsweise mittels Smartphones ausgeführt wird.

In einer Ausführungsform weist das Gehäuse 1 mindestens eine Aushöhlung auf, welche zusammen mit dem Vakuumsauger 2 ein Vakuum aufbauen kann.

Die erfindungsgemäße mobile Sicherheitsvorrichtung kann beispielsweise mit einem Zweirad verbunden werden und damit das Fahrrad gesichert werden; wird das erfindungsgemäße Zweiradschloss nicht benötigt, kann es entweder am Zweirad oder anderweitig verstaut werden.

### Bezugszeichenliste

- 1:: Gehäuse der erfindungsgemäßen mobilen Sicherheitsvorrichtung
- 2:: Vakuumsauger - GSM Modul
- 3:: Kette oder Seil
- 4:: Elektrische Vakuumpumpe
- 5:: Komponententräger - integrierter Datenlogger
- 6:: Akku-Einheit - Beschleunigungs- / Lagesensor / Temperatursensor
- 7:: Steuerungseinheit- evtl. mit Solarzelle
- 8:: Verschluss - Alarmsignal (Alarm-Ton) bei Manipulation
- 9:: Öse

Darüber hinaus kann die erfindungsgemäße mobile Sicherheitsvorrichtung insbesondere zum Absichern von Containern, beispielsweise auf LKWs, Schiffen oder Zügen, verwendet werden.

Die erfindungsgemäße mobile Sicherheitsvorrichtung verringert das Risiko von Containerdiebstahl und -manipulation deutlich und senkt somit die Transportversicherungsgebühren. Bekanntlich ist die Versicherung erst im Hafen günstig.

Die erfindungsgemäße mobile Sicherheitsvorrichtung ist ähnlich wie ein Vorhängeschloss von dem Container lösbar abnehmbar, so dass ein Pool von Schlössern in verschiedenen Häfen, Bahnhöfen oder Umschlagposten stationiert und beispielsweise gemietet und finanziert werden kann.

Zu diesem Zweck kann die erfindungsgemäße mobile Sicherheitsvorrichtung mit Software betrieben werden, welche unter anderem die nachfolgende Funktionsweise umfasst:
Die genaue Positionsangabe der erfindungsgemäßen mobilen Sicherheitsvorrichtung wird an ein zentrales Steuerungssystem transferiert; in einem zentralen Ort wird diese genaue Positionsangabe der erfindungsgemäßen mobilen Sicherheitsvorrichtung, beispielsweise auf einem Monitor, abgebildet. Hierdurch wird erreicht, dass man zentral die Information vorliegen hat, wo die erfindungsgemäße mobile Sicherheitsvorrichtung und damit der damit verbunende und gesicherte Containers sich befinden. Hierdurch wird ein einfaches Tracking des entsprechenden Containers möglich. Durch die Verwendung von entsprechenden mehreren erfindungsgemäßen mobilen Sicherheitsvorrichtungen kann eine ganze graphische Abbildung des Decks eines Containerschiffs oder eine ganze graphische Abbildung der Containerreihenfolge in einem Zug gewähreistet werden. Die gleiche Funktion ist auch in einem Containerhafen, z.B. einem Containerumschlagshafen, möglich.

Durch die zentrale Erfassung einer Vielzahl an erfindungsgemäßen mobilen Sicherheitsvorrichtungen kann auch eine simulierte AR (augmented reality)-Umgebung, in der Teams vor Ort live zentral, beispielsweise von einem technischen Support, zu den jeweiligen erfindungsgemäßen mobilen Sicherheitsvorrichtungen und damit zu den damit verbundenen Containern, geleitet werden können, bereitgestellt werden.

Das Team wird live mit der einer entsprechenden AR-Brille geführt, wobei Anweisungen zentral weitergegeben werden, die der Benutzer in sein Sichtfeld projiziert bekommt.

Die zentralen Software HoloDeck wird ein simuliertes Szenario darstellen, wie die Schleusen auf dem Containerschiff angebracht wurden.

Mit Hilfe der erfindungsgemäßen mobilen Sicherheitsvorrichtung ist es auch möglich, Conatiner zwecks Ausschleusung von einem Schiff, einem Zug oder eines LKW zu identifizieren.

Über eine Zollservice-App mit entsprechender Schnittstelle ist es möglich, Container verschlüsselt vom Zoll vor Ort zur Kontrolle freizugeben. Es handelt sich somit um eine einfache Verfahrensweise, welche den Zoll sowie Logistikunternehmen entlastet.

Über ein GPS-Modul ist jederzeit eine Ortung der Sicherheitsvorrichtung und damit des damit verbundenen Containers möglich. Zusätzlich kann auch ein GSM Modul (Frequenzen / Bänder müssen nicht festgelegt werden) verwendet werden.

Die mechanische Verriegelung kann durch ein elektronisches Schloss mit Verschlüsselung auf a) Zertifikatsebene, b) Blockchain Zertifikat, c) Privat-Key und/oder eine Kombination daraus erfolgen.

Eine Öffnung der Sicherheitsvorrichtung kann alternativ über einen oder zwei Schlüssel erfolgen, wobei auch eine unterschiedliche Freigabestufen, wie eine Zwei-Faktor Authentifizierung, möglich ist.

Die erfindungsgemäße Vorrichtung kann auch ohne Vakuum verwendet werden.

Die vorliegende erfindungsgemäße Vorrichtung kann einen integrierten Datenlogger umfassen.

Des Weiteren kann die vorliegende erfindungsgemäße Vorrichtung Sensoren aufweisen. Hierzu zählen insbesondere Beschleunigungs-, Lage- und Temperatursensoren, um mögliche Container/ Ladungseinflüsse auswerten zu können.

Um unabhängig von einem lokalen Stromzufluss zu sein, kann die vorliegende erfindungsgemäße Vorrichtung gegebenenfalls mit Solarzelle versehen sein. Diese Solarzellen können auf der erfindungsgemäßen Vorrichtung oder separat von der erfindungsgemäßen Vorrichtung vorliegen. Hierdurch werden weitere Vorteile bezüglich Wartungszyklen sowie Zwischenladen erreicht.

Des Weiteren ist die erfindungsgemäße Vorrichtung vorzugsweise mit einem Alarmsignal (Alarm-Ton) bei Manipulation (Öffnen des Sicherheitskontaktes / Siherheitsriegel ohne Freigabe), eventuell auch per GSM auf ein externes Gerät, ausgestattet.

Damit ein weltweites Tracking der erfindungsgemäßen mobilen Sicherheitsvorrichtung möglich ist, kann die erfindungsgemäßen mobilen Sicherheitsvorrichtung mit einer entsprechenden Einrichtung, beispielsweise Iridium Skylink 6100 oder Iridium Certus 100, verbunden werden. Zu diesem Zweck kann die erfindungsgemäßen mobilen Sicherheitsvorrichtung mit einer entsprechenden Halterung versehen werden, in welche ein Endteil zu dieser Einrichtung eingelassen ist.

Die Energieversorgung dieser zusätzlichen Einrichtung erfolgt über wiederaufladbare Batterien.

Derzeit sind Transportmittel (Schiffe, Züge und LKWs mit eigenem WIFI und ohne eigenem WIFI verfügbar.

### Szenario 1. Transportmittel mit eigenem Wifi:

Hier würden WIFI-Repeater ausreichen, die die WIFI-Signale von der Brücke in den Außenbereich verstärken und die entsprechenden Einrichtungen der erfindungsgemäßen mobilen Sicherheitsvorrichtung detektieren.

### Szenario 2: Transportmittel ohne eigenem WIFI

Hier wird ein Router so gut wie möglich in der Mitte oder über Deck platziert; dieses kann beispielsweise in einem separaten Container erfolgen, der dann über eine entsprechende Mobilfunk- oder Satelliteneinheit eine Kommunikation außerhalb des Transportmittels ermöglicht. Je nach Transportmittek wird bei hoher Auslastung Repeater verwendet.

## Patentansprüche

1. Verwendung einer mobilen Sicherheitsvorrichtung, wobei die mobile Sicherheitsvorrichtung eine Kette oder ein Seil (3) aufweist, die/das geöffnet und geschlossen werden kann, und welches mit einem Gehäuse (1) verbunden ist, welches an einer Seite eine Einrichtung aufweist, die in der Lage ist, mit einer im Wesentlichen glatten Oberfläche ein Vakuum auf- und abzubauen zur Befestigung an Containern..

2. Verwendung einer mobilen Sicherheitsvorrichtung nach Anspruch 1, **dadurch gekennzeichnet, dass** die mobile Sicherheitsvorrichtung bei Nichtbenutzung an einem beweglichen Gegenstand fixiert und / oder von dem beweglichen Gegenstand abgenommen werden kann.

3. Verwendung einer mobilen Sicherheitsvorrichtung nach Anspruch 1 oder 2, **dadurch gekennzeichnet, dass** das Gehäuse (1) eine elektrische Vakuumpumpe (4) aufweist, mit welcher ein Vakuum zwischen einer Fläche und dem Vakuumsauger (2) des Gehäuses (1) erzeugt werden kann.

4. Verwendung einer mobilen Sicherheitsvorrichtung nach einem der Ansprüche 1 bis 3, **dadurch gekennzeichnet, dass** das Gehäuse (1) eine Akku-Einheit (6) und eine Steuerungseinheit (7) aufweist, wobei mit Hilfe der Steuerungseinheit (7) ein Signal zum Aufbau oder Abbau des Vakuums an den Vakuumsauger (2) gesendet wird, welcher dann entsprechend die mobile Sicherheitsvorrichtung verschließt oder öffnet.

5. Verwendung einer mobilen Sicherheitsvorrichtung nach einem der Ansprüche 1 bis 4, **dadurch gekennzeichnet, dass** das Gehäuse (1) einen Komponententräger (5) aufweist, der den Vakuumsauger (2) räumlich von der elektrischen Vakuumpumpe (4) und / oder er Akku-Einheit (6) trennt.

6. Verwendung einer mobilen Sicherheitsvorrichtung nach einem der Ansprüche 1 bis 4, **dadurch gekennzeichnet, dass** die Kette oder das Seil (3) mit Hilfe eines Verschlusses (8) geöffnet und geschlossen werden kann, so dass die Kette oder das Seil (3) durch eine Öffnung des beweglichen Gegenstands geführt werden kann.

7. Verwendung einer mobilen Sicherheitsvorrichtung nach einem der Ansprüche 1 bis 6, **dadurch gekennzeichnet, dass** der Unterdruck automatisiert auf- und abgebaut wird.

8. Verwendung einer mobilen Sicherheitsvorrichtung nach einem der Ansprüche 1 bis 7, **dadurch gekennzeichnet, dass** das Auf- und Abbauen des Unterdrucks eine Verifizierung erfordert.

9. Verwendung einer mobilen Sicherheitsvorrichtung nach einem der Ansprüche 1 bis 8, **dadurch gekennzeichnet, dass** es sich bei dem beweglichen Gegenstand um ein Zweirad, insbesondere um ein Fahrrad, handelt.

10. Verwendung einer mobilen Sicherheitsvorrichtung nach einem der Ansprüche 1 bis 9 zur Identifizierung des mit der mobilen Sicherheitsvorrichtung verbundenen Containers.

11. Verwendung einer mobilen Sicherheitsvorrichtung nach einem der Ansprüche 1 bis 10 zur Identifizierung des mit der mobilen Sicherheitsvorrichtung verbundenen Containers sowie der darin gelagerten Waren.

12. Mobile Sicherheitsvorrichtung, **dadurch gekennzeichnet, dass** die mobile Sicherheitsvorrichtung eine Kette oder ein Seil (3) aufweist, die/das geöffnet und geschlossen werden kann, und welches mit einem Gehäuse (1) verbunden ist, welches an einer Seite eine Einrichtung aufweist, die in der Lage ist, mit einer im Wesentlichen glatten Oberfläche ein Vakuum auf- und abzubauen und dass die mobile Sicherheitseinrichtung Einrichtungen aufweist, die Daten zu Position seiner Position in ein zentrales Datensystem überträgt.

13. Mobile Sicherheitsvorrichtung nach Anspruch 12, **dadurch gekennzeichnet, dass** das zentrale Datensystem Daten zu einer Mehrzahl an mobilen Sicherheitsvorrichtungen umfasst und die geografische Position von einer Vielzahl an mobilen Sicherheitsvorrichtungen überwacht.

14. Mobile Sicherheitsvorrichtung nach Anspruch 12 oder 13, **dadurch gekennzeichnet, dass** durch eine Spiegelung der Daten zu Positionen der mobilen Sicherheitsvorrichtungen eine AR (augmented reality)-Oberfläche erzeugt wird, die an Personen gespiegelt wird.

15. Mobile Sicherheitsvorrichtung nach einem der Ansprüche12 bis 14, **dadurch gekennzeichnet, dass** die mobile Sichheitsvorrichtung eine Schnittstelle zum Datenaustausch aufweist.
